# EUROPEAN PATENT SPECIFICATION

(11) **EP 2 637 930 B1**
(45) Date of publication and mention of the grant of the patent: **08.02.2017**
(21) Application number: 11761241.6
(22) Date of filing: 19.09.2011
(51) Int. Cl.: B66F 7/28, B66F 7/10, F01D 25/28, B64F 5/00, B62B 3/10

(54) **ENGINE LOADING SYSTEM**
TRIEBWERKSVERLADESYSTEM
SYSTÈME DE CHARGEMENT D'UN MOTEUR

(30) Priority: 08.11.2010 US 941584
(43) Date of publication of application: 18.09.2013
(73) Proprietor: The Boeing Company, Chicago, IL 60606-1596 (US)
(72) Inventor: GROVES, Oliver J., Freeland, Washington 98249 (US); KONEN, Michael H., Marysville Washington 98270 (US); MAYOR, Thomas D., Burien Washington 98148 (US)
(74) Representative: Howson, Richard G.B.
(86) International application number: PCT/US2011/052207
(87) International publication number: WO 2012/064410

(56) References cited:
- EP-A1- 1 348 626
- EP-A2- 2 165 932
- DE-A1- 3 427 042
- DE-A1- 19 612 626
- US-A- 4 461 455
- US-B1- 6 485 247
- SOLEX LOGISTICS (SINGAPORE) PTE LTD: 'Solex Logistic', [Online] 31 December 2008, XP055236838 Retrieved from the Internet: <URL:http://www.solexlogistics.com/latestne ws2008.html> [retrieved on 2015-12-16]

## Description

### BACKGROUND INFORMATION

The present disclosure relates generally to aircraft and, in particular, to engines for aircraft. Still more particularly, the present disclosure relates generally to a method and apparatus for moving an engine relative to an aircraft.

An aircraft engine is a propulsion system for aircraft. With commercial aircraft, the engine typically may take the form of a turbo jet, a turbo fan, or some other suitable type of jet engine. When manufacturing aircraft, these types of engines may be installed in the aircraft as part of the assembly process. Typically, an engine may be attached to a strut in the wing or in some other location on the aircraft.

In installing an engine, the engine may be typically located on a dolly or some other structure. This dolly may be, for example, without limitation, moved to place the engine in a location relative to the aircraft. Once the engine is moved into a position relative to the aircraft, the engine may still need to be positioned using another tool. A bootstrap tool may be, for example, without limitation, a mechanical system configured to raise the engine from the dolly, such that the engine can be attached to the strut. The bootstrap tool may be attached to the wing of the aircraft. Thereafter, the bootstrap tool may be attached to the engine and raise the engine into position for installation.

In other cases, a crane may be present in the area in which the aircraft is being manufactured. The crane may be used with an engine overhead sling to raise the engine and position it relative to the aircraft for installation. DE 3427042 A1 discloses a universal engine changing device according to the preamble of claim 1. EP 2165932 A2 discloses a transport and assembly vehicle for a component module. US 6485247 B1 discloses an engine uplift loader. US 4461455 A discloses an aircraft engine lifting and positioning apparatus. DE 19612626 A1 discloses an appliance for positioning and transporting airplane power plants.

With these and other currently used systems, the equipment may be larger and heavier than desired. Further, the cost to maintain the equipment and make sure the equipment is available in different facilities also may increase the expense and time needed. For example, during maintenance, similar equipment for removing the engine for maintenance also may be
used. After maintenance is performed, the engine may then be re-attached with this same type of equipment.

Further, the use of currently available equipment for installing and removing engines from aircraft may require more operators than desired.

Therefore, it would be advantageous to have a method and apparatus that takes into account at least one of the issues discussed above, as well as other possible issues.

### SUMMARY

In one advantageous embodiment, an apparatus may comprise a cradle, a movement system, and an adjustment system. The cradle may be configured to hold an engine. The movement system may be associated with the cradle and configured to move the cradle. The adjustment system may be configured to change a position of the cradle with respect to the movement system.

In another advantageous embodiment, an engine loader may comprise a cradle, a movement system, and an adjustment system. The cradle may be configured to hold an engine. The movement system may be associated with the cradle and configured to move the cradle. The movement system may comprise a platform associated with the cradle and a plurality of wheels associated with the platform. The adjustment system may be configured to change a position of the cradle with respect to the movement system and an engine strut on an aircraft. The adjustment system may comprise an actuator system and air bearing system. The actuator system may be associated with the cradle. The actuator system may comprise a number of actuators associated with the cradle. Each actuator in the number of actuators may be selected from a group comprising a hydraulic actuator, a machine screw, a ball screw jack, and a telescope jack. A number of universal joints may be associated with the number of actuators and may be located on a number of ends of the number of actuators associated with the cradle. Each universal joint in the number of universal joints may comprise a spherical bearing, a compression spring configured to center the spherical bearing, and an elongate member.

In yet another advantageous embodiment, a method may be provided for moving an engine. The engine may be moved in a cradle with respect to a location on an aircraft using a movement system associated with the cradle. A position of the cradle with respect to the movement system and the location on the aircraft may be changed using an adjustment system associated with the movement system. The engine may be connected to the location after changing the position of the cradle.

In still yet another advantageous embodiment, a method may be provided for moving an engine. The engine may be moved in a cradle with respect to an engine strut on an aircraft using a movement system associated with the cradle. A position of the cradle with respect to the movement system and the engine strut on the aircraft may be changed using an adjustment system associated with the movement system to move the engine into a desired position relative to the engine strut on the aircraft. In changing the position of the cradle, a height of the cradle may be changed using an actuator system to change a height of the engine, and an alignment of the cradle may be adjusted using an air bearing system to adjust an alignment of the engine. The engine may be bolted in the desired position to the engine strut after changing the position of the cradle. The position of the cradle may be changed with respect to the movement system and the location on the aircraft using the adjustment system associated with the movement system to move the cradle away from the engine. The movement system may be moved away from the location on the aircraft after moving the cradle away from the engine. The movement system may be moved away from the location on the aircraft after moving the cradle away from the engine. The movement system may be moved away from the engine after connecting the engine to the engine strut on the aircraft.

Alternative aspects of the disclosure may be defined according to the following numbered paragraphs:
1. An apparatus comprising:
   a cradle configured to hold an engine;
   a movement system associated with the cradle and configured to move the cradle; and
   an adjustment system configured to change a position of the cradle with respect to the movement system.
2. The apparatus of paragraph 1, wherein the movement system comprises:
   a platform associated with the cradle; and
   a plurality of wheels associated with the platform.
3. The apparatus of paragraph 1, wherein the adjustment system comprises:
   an actuator system associated with the cradle.
4. The apparatus of claim 3, wherein the adjustment system further comprises:
   an air bearing system.
5. The apparatus of paragraph 3, wherein the actuator system comprises a number of actuators associated with the cradle and wherein each actuator in the number of actuators is selected from a group comprising a hydraulic actuator, a machine screw, a ball screw jack, and a telescope jack.
6. The apparatus of paragraph 5, wherein a number of universal joints is associated with the number of actuators.
7. The apparatus of paragraph 6, wherein the number of universal joints is located on a number of ends of the number of actuators associated with the cradle.
8. The apparatus of paragraph 6, wherein each universal joint in the number of universal joints comprises:
   a spherical bearing;
   a compression spring configured to center the spherical bearing; and
   an elongate member.
9. The apparatus of paragraph 1, wherein the adjustment system is configured to change the position of the cradle with respect to the movement system and a location on an aircraft.
10. The apparatus of paragraph 9, wherein the location on the aircraft is an engine strut on the aircraft.
11. The apparatus of paragraph 1 further comprising:
   the engine in the cradle.
12. An engine loader comprising:
   a cradle configured to hold an engine;
   a movement system associated with the cradle and configured to move the cradle in which the movement system comprises:
      a platform associated with the cradle; and
      a plurality of wheels associated with the platform; and
   an adjustment system configured to change a position of the cradle with respect to the movement system and an engine strut on an aircraft in which the adjustment system comprises:
      an actuator system associated with the cradle in which the actuator system comprises a number of actuators associated with the cradle; in which each actuator in the number of actuators is selected from a group comprising a hydraulic actuator, a machine screw, a ball screw jack, and a telescope jack; in which a number of universal joints is associated with the number of actuators and is located on a number of ends of the number of actuators associated with the cradle; and in which each universal joint in the number of universal joints comprises:
         a spherical bearing;
         a compression spring configured to center the spherical bearing; and
         an elongate member; and
      an air bearing system.
13. A method for moving an engine, the method comprising:
   moving the engine in a cradle with respect to a location on an aircraft using a movement system associated with the cradle;
   changing a position of the cradle with respect to the movement system and the location on the aircraft using an adjustment system associated with the movement system; and
   connecting the engine to the location after changing the position of the cradle.
14. The method of paragraph 13, wherein the step of changing the position of the cradle with respect to the movement system and the location on the aircraft using the adjustment system associated with the movement system comprises:
   changing a height of the cradle using an actuator system to change a height of the engine.
15. The method of paragraph 13, wherein the step of changing the position of the cradle with respect to the movement system and the location on the aircraft using the adjustment system associated with the movement system comprises:
   adjusting an alignment of the cradle using an air bearing system to adjust an alignment of the engine.
16. The method of paragraph 13, wherein the step of changing the position of the cradle with respect to the movement system and the location on the aircraft using the adjustment system associated with the movement system comprises:
   changing the position of the cradle with respect to the movement system and the location on the aircraft using the adjustment system associated with the movement system to move the engine into a desired position relative to the location on the aircraft.
17. The method of paragraph 16, wherein the step of connecting the engine to the location after changing the position of the cradle comprises:
   bolting the engine in the desired position to the location on the aircraft after changing the position of the cradle.
18. The method of paragraph 13 further comprising:
   changing the position of the cradle with respect to the movement system and the location on the aircraft using the adjustment system associated with the movement system to move the cradle away from the engine; and
   moving the movement system away from the location on the aircraft after moving the cradle away from the engine.
19. The method of paragraph 18 further comprising:
   moving the movement system to the location on the aircraft;
   changing the position of the cradle with respect to the movement system and the location on the aircraft using the adjustment system associated with the movement system to move the cradle towards the engine at the location on the aircraft;
   disconnecting the engine from the location on the aircraft such that the engine has a desired position in the cradle;
   changing the position of the cradle with respect to the movement system and the location on the aircraft using the adjustment system associated with the movement system to move the engine away from the location on the aircraft; and
   moving the movement system away from the location on the aircraft.
20. The method of paragraph 13, wherein the location is an engine strut on the aircraft.
21. A method for moving an engine, the method comprising:
   moving the engine in a cradle with respect to an engine strut on an aircraft using a movement system associated with the cradle;
   changing a position of the cradle with respect to the movement system and the engine strut on the aircraft using an adjustment system associated with the movement system to move the engine into a desired position relative to the engine strut on the aircraft in which the changing step comprises:
      changing a height of the cradle using an actuator system to change a height of the engine; and
      adjusting an alignment of the cradle using an air bearing system to adjust an alignment of the engine;
   bolting the engine in the desired position to the engine strut after changing the position of the cradle;
   changing the position of the cradle with respect to the movement system and the location on the aircraft using the adjustment system associated with the movement system to move the cradle away from the engine;
   moving the movement system away from the location on the aircraft after moving the cradle away from the engine; and
   moving the movement system away from the engine after connecting the engine to the engine strut on the aircraft.
22. The method of paragraph 21 further comprising:
   moving the movement system to the engine strut on the aircraft;
   changing the position of the cradle with respect to the movement system and the engine strut on the aircraft using the adjustment system associated with the movement system to move the cradle towards the engine at the engine strut on the aircraft;
   disconnecting the engine from the engine strut on the aircraft such that the engine has the desired position in the cradle;
   changing the position of the cradle with respect to the movement system and the engine strut on the aircraft using the adjustment system associated with the movement system to move the engine away from the engine strut on the aircraft; and
   moving the movement system away from the engine strut on the aircraft. The present invention is set out in claim 1.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:
**Figure 1** is an illustration of an aircraft manufacturing and service method in accordance with an advantageous embodiment;
**Figure 2** is an illustration of an aircraft in which an advantageous embodiment may be implemented;
**Figure 3** is an illustration of an engine movement environment in accordance with an advantageous embodiment;
**Figure 4** is an illustration of a perspective view of an engine movement system in accordance with an advantageous embodiment;
**Figure 5** is an illustration of a bottom view of an engine movement system in accordance with an advantageous embodiment;
**Figure 6** is an illustration of an enlarged partially-phantom view of a portion of an engine movement system in accordance with an advantageous embodiment;
**Figure 7** is an illustration of an enlarged partially-phantom view of a portion of an engine movement system in accordance with an advantageous embodiment;
**Figure 8** is an illustration of an engine in a cradle for an engine movement system in accordance with an advantageous embodiment;
**Figure 9** is an illustration of an engine movement system in accordance with an advantageous embodiment;
**Figure 10** is an illustration of a flowchart of a process for moving an engine in accordance with an advantageous embodiment;
**Figure 11** is an illustration of a flowchart of a process for attaching an engine to an engine strut in accordance with an advantageous embodiment; and
**Figure 12** is an illustration of a flowchart for disconnecting an engine from an engine strut in accordance with an advantageous embodiment.

### DETAILED DESCRIPTION

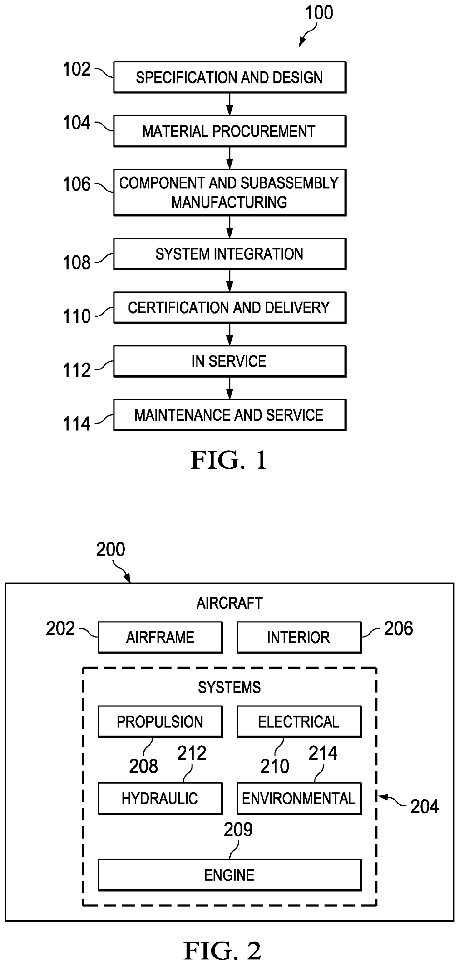

Referring more particularly to the drawings, embodiments of the disclosure may be described in the context of aircraft manufacturing and service method **100** as shown in **Figure 1** and aircraft **200** as shown in **Figure 2**. Turning first to **Figure 1**, an illustration of an aircraft manufacturing and service method is depicted in accordance with an advantageous embodiment. During pre-production, aircraft manufacturing and service method **100** may include specification and design **102** of aircraft **200** in **Figure 2** and material procurement **104.**

During production, component and subassembly manufacturing **106** and system integration **108** of aircraft **200** in **Figure 2** takes place. Thereafter, aircraft **200** in **Figure 2** may go through certification and delivery **110** in order to be placed in service **112**. While in service **112** by a customer, aircraft **200** in **Figure 2** is scheduled for routine maintenance and service **114**, which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of venders, subcontractors, and suppliers; and an operator may be an airline, leasing company, military entity, service organization, and so on.

With reference now to **Figure 2**, an illustration of an aircraft is depicted in which an advantageous embodiment may be implemented. In this example, aircraft **200** is produced by aircraft manufacturing and service method **100** in **Figure 1** and may include airframe **202** with a plurality of systems **204** and interior **206**. Examples of systems **204** may include one or more of propulsion system **208**, engine system **209**, electrical system **210**, hydraulic system **212**, and environmental system **214**. Any number of other systems may be included. Although an aerospace example is shown, different advantageous embodiments may be applied to other industries, such as the automotive industry.

Apparatus and methods embodied herein may be employed during at least one of the stages of aircraft manufacturing and service method **100** in **Figure 1****.** As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C or item B and item C.

In one illustrative example, components or subassemblies produced in component and subassembly manufacturing **106** in **Figure 1** may be fabricated or manufactured in a manner similar to components or subassemblies produced while aircraft **200** is in service **112** in **Figure 1**. As yet another example, a number of apparatus embodiments, method embodiments, or a combination thereof may be utilized during production stages, such as component and subassembly manufacturing **106** and system integration **108** in **Figure 1**. A number, when referring to items, means one or more items. For example, a number of apparatus embodiments may be one or more apparatus embodiments.

A number of apparatus embodiments, method embodiments, or a combination thereof may be utilized while aircraft **200** is in service **112** and/or during maintenance and service **114** in **Figure 1**. The use of a number of the different advantageous embodiments may substantially expedite the assembly of and/or reduce the cost of assembling aircraft **200**.

The different advantageous embodiments recognize and take into account a number of different considerations. For example, without limitation, the different advantageous embodiments recognize and take into account that the equipment for the currently available systems for moving engines for installation and removing engines from aircraft may be larger and more expensive than desired.

Further, the different advantageous embodiments recognize and take into account that, with the currently used systems, the equipment may be needed at each facility in which an engine may be moved for installation or when being removed from an aircraft. The different advantageous embodiments recognize and take into account that having the equipment present and maintaining these systems may be more expensive than desired. Further, the different advantageous embodiments also recognize and take into account that the number of operators needed to install or remove an engine may be greater than desired.

The different advantageous embodiments recognize and take into account that it may be desirable to have a simpler system for moving an engine. For example, without limitation, the different advantageous embodiments recognize and take into account that it may be desirable to have a system that may be shipped with the engine without requiring the equipment to be initially present at the location of the aircraft to install an engine to the aircraft.

Thus, the different advantageous embodiments provide a method and apparatus for moving an engine. In one advantageous embodiment, an apparatus may comprise a cradle, a movement system, and an adjustment system. The cradle may be configured to hold an engine. The movement system may be associated with the cradle and may be configured to move the cradle. The adjustment system may be configured to change a position of the cradle relative to the movement system.

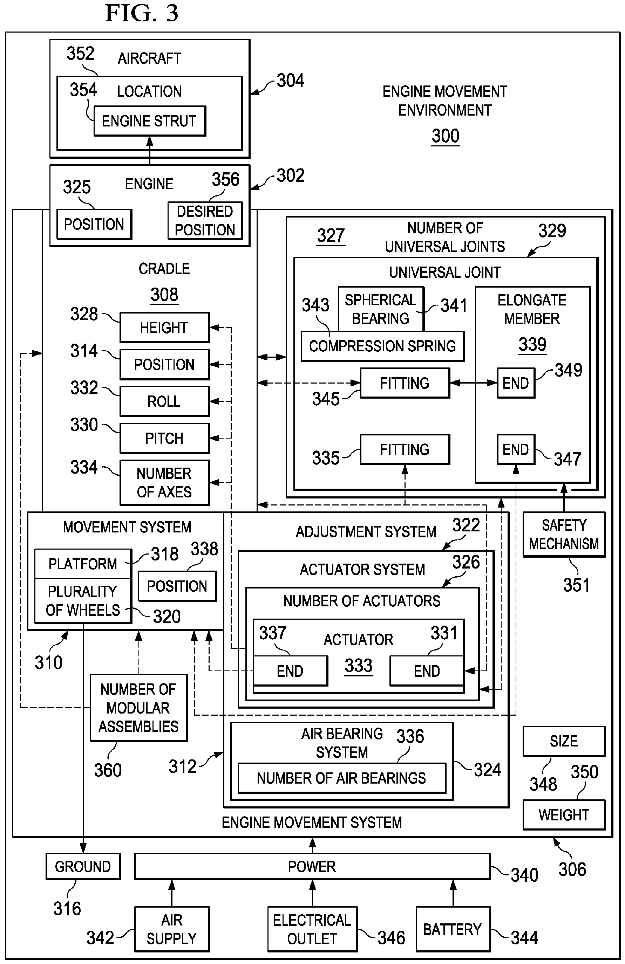

With reference now to **Figure 3**, an illustration of an engine movement environment is depicted in accordance with an advantageous embodiment. In this illustrative example, engine movement environment **300** may be used to move engine **302** relative to aircraft **304**. Aircraft **304** may be, for example, without limitation, aircraft **200** in **Figure 2**.

In these illustrative examples, engine **302** may be moved relative to aircraft **304** during different phases of aircraft manufacturing and service method **100** in **Figure** 1. For example, without limitation, engine **302** may be moved to install engine **302** in aircraft **304** during system integration **108** in aircraft manufacturing and service method **100** in **Figure 1**. As yet another example, engine **302** may be installed or removed from aircraft **304** during maintenance and service **114** in aircraft manufacturing and service method **100** in **Figure 1**.

In these illustrative examples, engine **302** may be moved relative to aircraft **304** using engine movement system **306**. Engine movement system **306** may include cradle **308**, movement system **310**, adjustment system **312**, as well as, possibly, other components not illustrated in this example.

Cradle **308** may be configured to hold engine **302**. Movement system **310** may be associated with cradle **308**. A first component may be considered to be associated with a second component by being secured, attached, bonded, fastened, and/or mounted to the second component. Further, the first component may be associated with the second component by being connected to the second component in some other suitable manner. Still further, the first component also may be connected to the second component by using a third component. The first component may also be considered to be associated with the second component by being formed as part of and/or an extension of the second component.

Further, movement system **310** may be configured to move cradle **308** relative to aircraft **304**. Adjustment system **312** may be associated with cradle **308** and/or movement system **310**. Adjustment system **312** may be configured to change position **314** of cradle **308** with respect to movement system **310**.

In this illustrative example, movement system **310** may move on ground **316**. Movement system **310** may comprise platform **318** and plurality of wheels **320**. Of course, in other illustrative embodiments, other mobility mechanisms may be used in addition to, or in place of, plurality of wheels **320**. For example, without limitation, feet and/or tracks may be used.

In these illustrative examples, adjustment system **312** may comprise actuator system **322** and air bearing system **324**. Actuator system **322** may include number of actuators **326**. Number of actuators **326** may take a number of different forms. For example, without limitation, number of actuators **326** may include at least one of a hydraulic actuator, a machine screw, a ball jack screw, a telescope jack, and some other suitable type of actuator. One or more of these types of actuators may be used to implement an actuator in number of actuators **326**.

In these illustrative examples, number of actuators **326** in actuator system **322** may change height **328** of cradle **308** in changing position **314** of cradle **308** relative to aircraft **304**. Additionally, in some illustrative examples, number of actuators **326** may be used to adjust one of pitch **330** and roll **332** of cradle **308** in addition to changing height **328**. In other words, number of actuators **326** may change position **314** of cradle **308** in number of axes **334** in these illustrative examples. Further, in this manner, number of actuators **326** may also change position **325** of engine **302** in cradle **308** relative to aircraft **304**.

As depicted in these examples, engine movement system **306** may also include number of universal joints **327** associated with number of actuators **326**. Number of universal joints **327** may allow number of actuators **326** to be connected to cradle **308**.

In these illustrative examples, universal joint **329** may be an example of one of number of universal joints **327**. Universal joint **329** may be associated with end **331** of actuator **333** in number of actuators **326**. End **331** may be the end of actuator **333** that is associated with cradle **308**. End **337** of actuator **333** may be opposite to end **331**. End **337** may be associated with movement system **310**.

Universal joint **329** may include elongate member **339**, spherical bearing **341**, compression spring **343**, fitting **345**, and fitting **335**. In these illustrative examples, elongate member **339** may be associated with movement system **310** and cradle **308**. For example, without limitation, end **347** of elongate member **339** may be connected to movement system **310**.

Fitting **345** may connect end **349** of elongate member **339** to cradle **308**. Fitting **345** may be, for example, without limitation, a clamp configured to clamp elongate member **339** to cradle **308**. Similarly, fitting **335** may be configured to connect actuator **333** at end **331** of actuator **333** to elongate member **339**.

Additionally, compression spring **343** may be configured to center spherical bearing **341**. Compression spring **343** may center spherical bearing **341** to reduce bending of elongate member **339**. In other words, compression spring **343** may center spherical bearing **341** to apply pressure that may increase the rigidity of elongate member **339**. This increased rigidity may allow cradle **308** to remain stable relative to movement system **310** when cradle **308** is moved.

Further, in some illustrative examples, engine movement system **306** may include safety mechanism **351**. Safety mechanism **351** may be configured to substantially prevent elongate member **339** of universal joint **329** from extending and/or retracting in an undesired manner. In other words, elongate member **339** may be substantially prevented from moving upwards and/or downwards more than desired.

As depicted in these examples, air bearing system **324** may include number of air bearings **336**. Number of air bearings **336** in air bearing system **324** may be used to adjust position **314** of cradle **308**. In these illustrative examples, position **314** may be adjusted by adjusting position **338** of movement system **310**. In other words, air bearing system **324** may adjust position **338** of engine movement system **306**. Air bearing system **324** may be used during movement of movement system **310** along ground **316** and/or during positioning of cradle **308** relative to aircraft **304** with adjustment system **312**.

For example, in these illustrative examples, air bearing system **324** may raise engine movement system **306** to take into account unevenness in ground **316**. Further, air bearing system **324** may be used to rotate engine movement system **306.** In other words, air bearing system **324** may be used to float engine movement system **306.**

In these illustrative examples, power **340** for engine movement system **306** may be provided through a number of different sources. For example, without limitation, power **340** may be provided using air supply **342.** Air supply **342** may provide power **340** to operate air bearing system **324** and actuator system **322.** In other illustrative examples, power **340** may also be provided using battery **344** and/or electrical outlet **346,** depending on the type of actuators in actuator system **322.**

Thus, the different advantageous embodiments provide a capability to move engine **302** relative to aircraft **304** without additional equipment as currently used. In other words, a bootstrap, a crane, and/or other equipment may be unnecessary.

With the different advantageous embodiments, the movement of engine **302** may be provided as part of engine movement system **306**. In these illustrative examples, engine movement system **306** may have at least one of size **348** and weight **350** suitable for shipping engine movement system **306** with aircraft **304**. In other words, engine **302** may be, for example, without limitation, shipped in cradle **308** of engine movement system **306**. As a result, the equipment needed to attach engine **302** to aircraft **304** may be moved with engine **302** during shipping.

In these illustrative examples, engine movement system **306** may be configured to move and position cradle **308** with respect to location **352** on aircraft **304**. Location **352** may be engine strut **354** on aircraft **304**. In these examples, cradle **308** may be moved to engine strut **354** on aircraft **304** to install engine **302**. Installing engine **302** may include attaching engine **302** to engine strut **354**.

For example, without limitation, after movement system **310** is moved to engine strut **354**, adjustment system **312** may be configured to change position **314** of cradle **308** to move engine **302** in cradle **308** into desired position **356** relative to engine strut **354**. Once engine **302** has desired position **356** relative to engine strut **354**, engine **302** may be connected to engine strut **354**.

As used herein, when a first component, such as engine **302**, is connected to a second component, such as engine strut **354**, the first component may be connected to the second component without any additional components between the two components connected to each other. The first component also may be connected to the second component by one or more other components. Further, the first component may be connected to the second component by being secured, attached, bonded, fastened, bolted, welded, mounted, and/or connected in some other suitable manner to the second component.

Cradle **308** may, in these examples, be disconnected from engine **302** and moved away from location **352** on aircraft **304**. In these illustrative examples, engine movement system **306** may also be used to remove engine **302** from location **352** on aircraft **304**.

The illustration of engine movement environment **300** in **Figure 3** is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in some advantageous embodiments, additional movement systems in addition to engine movement system **306** may be present to move other engines in addition to engine **302**. In still other illustrative examples, engine movement system **306** may be operated using a computer, through human operators, or a combination of the two.

In some illustrative examples, one or more of number of air bearings **336** may be raised and/or lowered using other components and/or tools in addition to the ones described. For example, without limitation, a crank handle (not shown), may be used to raise and/or lower one or more of number of air bearings **336**. Still further, in some illustrative examples, other components, such as a stowage container (not shown), may be included in engine movement system **306**.

In other illustrative examples, cradle **308** may include portable work stands associated with cradle **308**. These portable work stands may be used to connect cradle **308** to engine **302**. In still other illustrative examples, all of number of universal joints **327** may not have compression spring **343**. For example, without limitation, universal joint **339** may not have compression spring **343**, while all other universal joints in number of universal joints **327** have compression spring **343**. Further, spherical bearing **341** for universal joint **329** may be fixed such that spherical bearing **341** forms a pivot point for cradle **308**. In this manner, cradle **308** may be rotated about pivot point in about 360 degrees.

In some illustrative examples, cradle **308** and movement system **310** may be implemented using currently available systems. When currently available systems are used for cradle **308** and movement system **310**, adjustment system **312** may take the form of number of modular assemblies **360**. Each of number of modular assemblies **360** may include an actuator from number of actuators **326**, an air bearing from number of air bearings **336**, and/or other suitable components.

Number of modular assemblies **360** may be attached to at least one cradle **308** and movement system **310** to form engine movement system **306**. In this manner, additional equipment, other than engine movement system **306**, may not be needed for moving engine **302**.

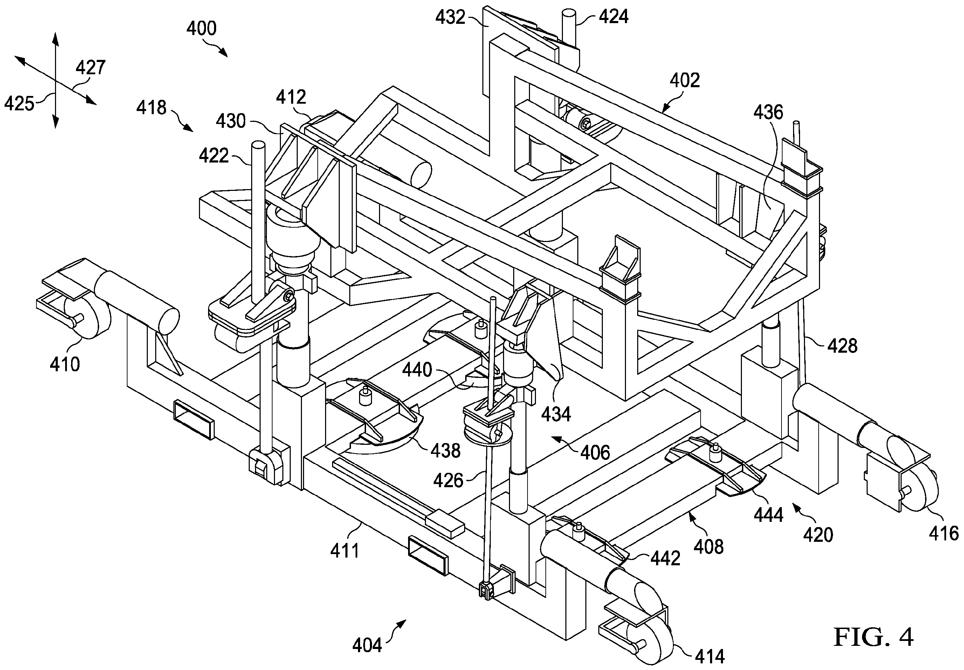

With reference now to **Figure 4**, an illustration of a perspective view of an engine movement system is depicted in accordance with an advantageous embodiment. In this illustrative example, engine movement system **400** may be an example of one implementation for engine movement system **306** in **Figure 3**.

As depicted, engine movement system **400** may include cradle **402**, movement system **404**, and adjustment system **406**. Cradle **402** is configured to hold an engine, such as engine **302** in **Figure 3**. Movement system **404** is associated with cradle **402**.

As illustrated, movement system **404** may include platform **408** and wheels **410**, **412**, **414**, and **416** connected to platform **408**. In particular, wheels **410**, **412**, **414**, and **416** may be connected to platform **408** at bottom **411** of engine movement system **400**. Wheels **410**, **412**, **414**, and **416** may allow movement system **404** to move over a surface, such as ground **316** in **Figure 3****.**

In this illustrative example, adjustment system **406** may be associated with movement system **404**. Further, adjustment system **406** may be associated with cradle **402**. Adjustment system **406** may be configured to change a position of cradle **402**. As depicted, adjustment system **406** may include actuator system **418** and air bearing system **420**.

In this depicted example, actuator system **418** may include actuators **422**, **424**, **426**, and **428**. In this illustrative example, actuators **422**, **424**, **426**, and **428** may take the form of machine screws. Of course, in other illustrative examples, other types of actuators, such as, for example, without limitation, hydraulic actuators, may be used.

Actuators **422**, **424**, **426**, and **428** may be associated with universal joints **430**, **432**, **434**, and **436**, respectively. In this illustrative example, universal joints **430**, **432**, **434**, and **436** may connect actuators **422**, **424**, **426**, and **428**, respectively, to cradle **402**. In particular, these universal joints may connect these actuators to cradle **402** such that cradle **402** moves when the actuators move.

In this illustrative example, each of actuators **422**, **424**, **426**, and **428** may be moved independently from the other actuators. In this manner, the height and/or position of cradle **402** in a number of axes may be changed. For example, without limitation, the position of cradle **402** relative to movement system **404** may be changed with rotation about axis **425** and/or axis **427**. In other words, a pitch and/or roll of cradle **402** may be changed using actuators **422**, **424**, **426**, and **428**.

Additionally, each of actuators **422**, **424**, **426**, and **428** may be configured to carry a selected load. Not all of actuators **422**, **424**, **426**, and **428** may be configured to carry the same load in these examples. For example, without limitation, actuator **422** and actuator **424** may be configured to carry a load up to about 20 tons. Actuator **426** and actuator **428** may be configured to carry a load up to about five tons.

As illustrated, air bearing system **420** may include air bearings **438**, **440**, **442**, and **444**. Air bearings **438, 440, 442,** and **444** may be on bottom **411** of engine movement system **400**. Power in the form of air may be supplied to air bearings **438, 440, 442,** and **444** using, for example, without limitation, air supply **342** in **Figure 3**.

Air bearings **438, 440, 442,** and **444** may allow adjustments to be made to the movement of engine movement system **400**. For example, without limitation, engine movement system **400** may be raised above a surface, floated, positioned, rotated, and/or moved in some other suitable manner using air bearings **438, 440, 442,** and **444**.

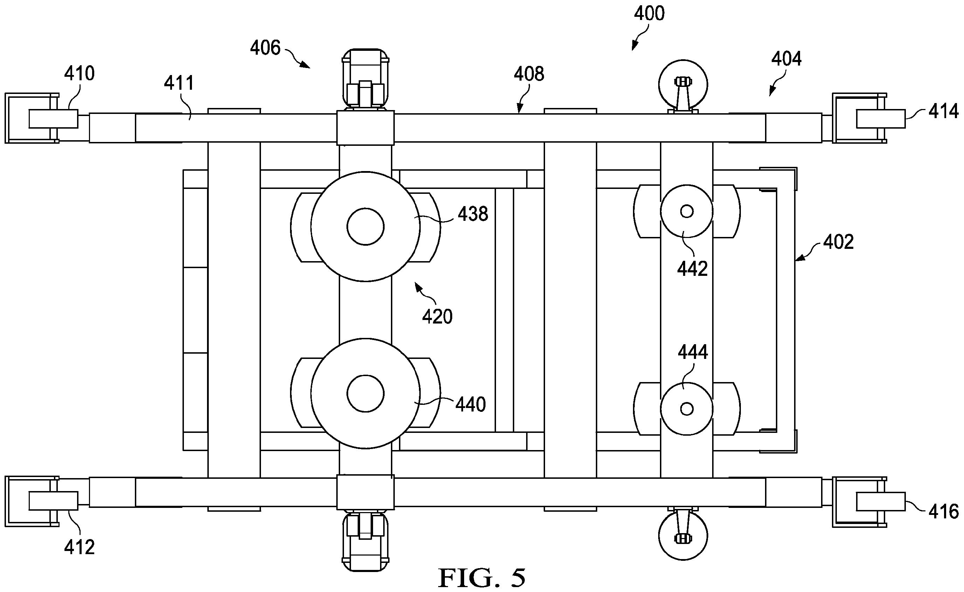

With reference now to **Figure 5**, an illustration of a bottom view of an engine movement system is depicted in accordance with an advantageous embodiment. In this illustrative example, a bottom view of engine movement system **400** from **Figure 4** may be depicted from bottom **411** such that air bearing system **420** may be seen more clearly.

Air bearings **438**, **440**, **442**, and **444** may have substantially the same size, or different sizes. As depicted, air bearing **438** and air bearing **440** may have substantially the same size. In this illustrative example, air bearing **438** and air bearing **440** may have a diameter of about 27 inches. This diameter may allow each of these air bearings to carry a load up to about 12,000 pounds.

Further, air bearing **442** and air bearing **444** may have substantially the same size. In this illustrative example, air bearing **442** and air bearing **444** may have a diameter of about 15 inches. This diameter may allow each of these air bearings to carry a load up to about 3,500 pounds.

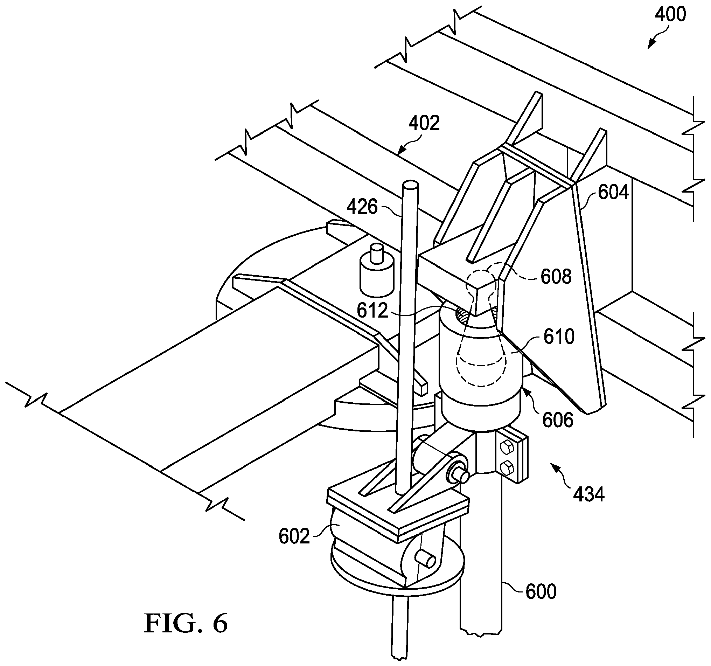

With reference now to **Figure 6**, an illustration of an enlarged partially-phantom view of a portion of an engine movement system is depicted in accordance with an advantageous embodiment. In this illustrative example, an enlarged partially-phantom view of universal joint **434** connecting actuator **426** to cradle **402** may be depicted to provide a more-detailed view of universal joint **434**.

As depicted, universal joint **434** may include elongate member **600**, fitting **602**, fitting **604**, spring assembly **606**, and spherical bearing **608**. In this illustrative example, elongate member **600** may also be referred to as a shaft. Fitting **602** may be configured to connect elongate member **600** to actuator **426**. Fitting **604** may be configured to connect elongate member **600** to cradle **402**. Fitting **604** may take the form of a clamp in this example.

In this illustrative example, spring assembly **606** may include housing **610** and compression spring **612** associated with housing **610**. In particular, compression spring **612** may be located inside housing **610**. Further, as depicted, spherical bearing **608** may also be located inside housing **610**. Compression spring **612** may be configured to center spherical bearing **608** and increase the rigidity of elongate member **600** to reduce bending of elongate member **600**.

Universal joint **436** connecting **actuator 428** to cradle **402** in **Figure 4** may be configured in substantially the same manner as universal joint **434** in these illustrative examples.

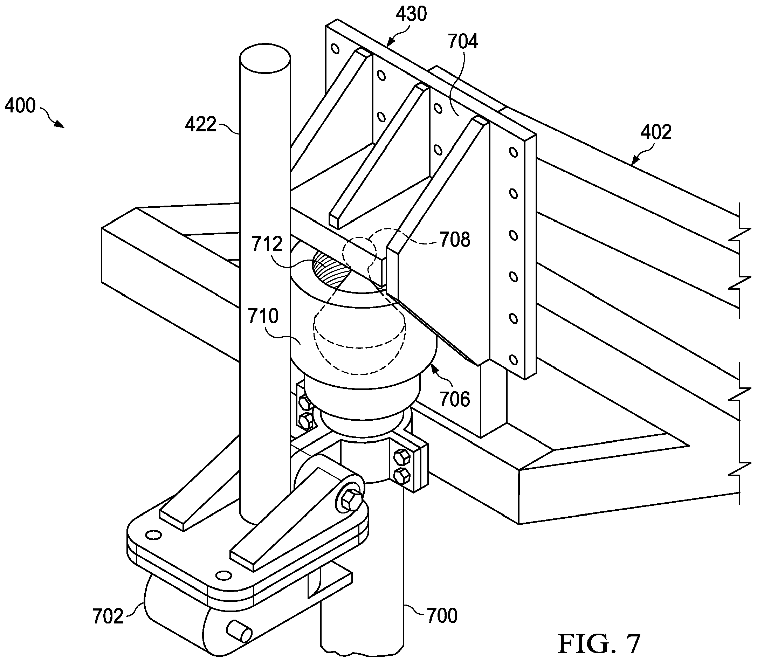

With reference now to **Figure 7**, an illustration of an enlarged partially-phantom view of a portion of an engine movement system is depicted in accordance with an advantageous embodiment. In this illustrative example, an enlarged partially-phantom view of universal joint **430** connecting actuator **422** to cradle **402** may be depicted to provide a more-detailed view of universal joint **430**.

As depicted, universal joint **430** may include elongate member **700**, fitting **702**, fitting **704**, spring assembly **706**, and spherical bearing **708**. In this illustrative example, elongate member **700** may also be referred to as a shaft. Fitting **702** may be configured to connect elongate member **700** to actuator **422**. Fitting **704** may be configured to connect elongate member **700** to cradle **402**. Fitting **704** may take the form of a clamp in this example.

In this illustrative example, spring assembly **706** may include housing **710** and compression spring **712** associated with housing **710**. In particular, compression spring **712** may be located inside housing **710**. Further, as depicted, spherical bearing **708** may also be located inside housing **710**. Compression spring **712** may be configured to center spherical bearing **708** and increase the rigidity of elongate member **700** to reduce bending of elongate member **700**.

Universal joint **432** connecting actuator **424** to cradle **402** in **Figure 4** may be configured in substantially the same manner as universal joint **430** in these illustrative examples.

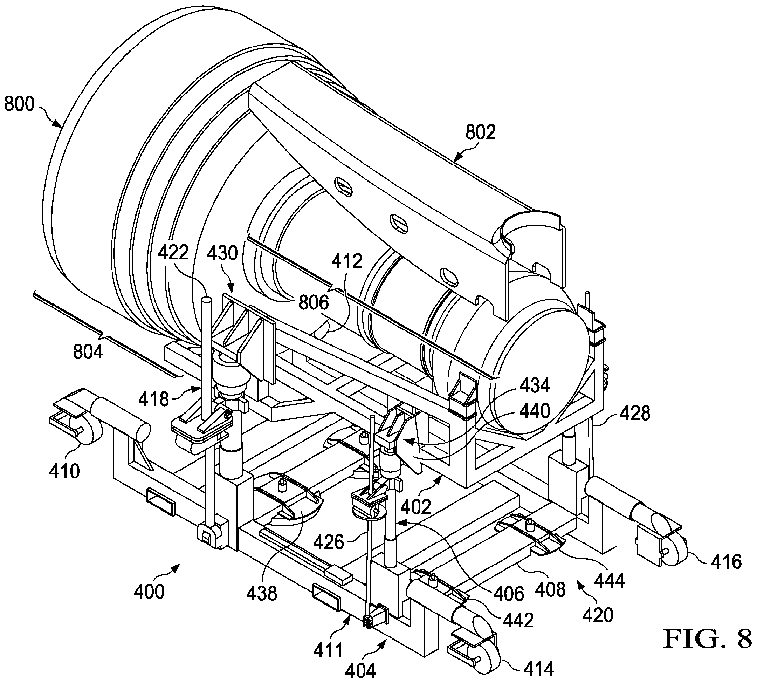

With reference now to **Figure 8**, an illustration of an engine in a cradle for an engine movement system is depicted in accordance with an advantageous embodiment. In this illustrative example, engine **800** may be in cradle **402** for engine movement system **400** from **Figure 4**. Engine **800** may be an engine for an aircraft, such as aircraft **200** in **Figure 2** and/or aircraft **304** in **Figure 3**.

As depicted, engine movement system **400** may be moved to a location at engine strut **802**. In this illustrative example, engine strut **802** may be a wing engine strut for the aircraft. Engine **800** may have forward portion **804** and aft portion **806**. Forward portion **804** may have a larger size and weight as compared to aft portion **806**. In this illustrative example, actuator **422** and actuator **424** in **Figure 4** (not shown in this view) are configured to carry the increased weight of forward portion **804**.

Adjustment system **406** for engine movement system **400** may be configured to change the position of cradle **402** to move engine **800** into a desired position at engine strut **802**. In the desired position, engine **800** may be attached to engine strut **802**. Additionally, adjustment system **406** for engine movement system **400** may be configured to carry engine **800** away from engine strut **802** when engine **800** has been disconnected from engine strut **802**.

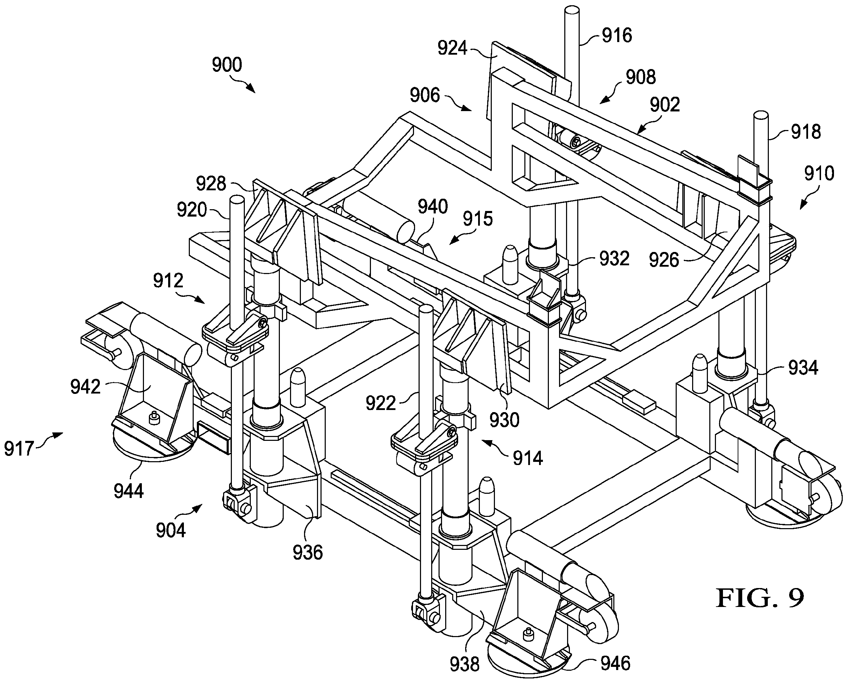

With reference now to **Figure 9**, an illustration of an engine movement system is depicted in accordance with an advantageous embodiment. In this illustrative example, engine movement system **900** may be an example of one implementation for engine movement system **306** in **Figure 3**.

In this depicted example, engine movement system **900** may include cradle **902**, movement system **904**, and adjustment system **906**. Cradle **902** and movement system **904** may take the form of currently available systems. As illustrated, adjustment system **906** may include modular assemblies **908**, **910**, **912**, **914**, **915**, and **917** associated with movement system **904** and cradle **902**. Modular assemblies **908**, **910**, **912**, **914**, **915**, and **917** may be examples of implementations of modular assemblies in number of modular assemblies **360** in **Figure 3****.**

Modular assemblies **908**, **910**, **912**, and **914** may include actuators **916**, **918**, **920**, and **922**, respectively. Further, modular assemblies **908**, **910**, **912**, and **914** may include universal joints **924**, **926**, **928**, and **930,** respectively. Universal joints **924, 926, 928,** and **930** may be configured to connect actuators **916, 918, 920,** and **922,** respectively, to cradle **902**.

Additionally, modular assemblies **908, 910, 912, 914, 915,** and **917** may also include fittings **932, 934, 936, 938, 940,** and **942**, respectively. These fittings may allow the modular assemblies to be connected to movement system **904**.

In this illustrative example, modular assembly **917** may also include air bearing **944**. Modular assembly **914** may also include air bearing **946**. Modular assembly **915** and modular assembly **910** may include air bearings not shown in this view.

Modular assemblies **908, 910, 912, 914, 915,** and **917** may be configured to be attached to currently available forms of cradle **902** and movement system **904** to reduce the time, effort, and/or cost of manufacturing engine movement system **900** that can move an engine.

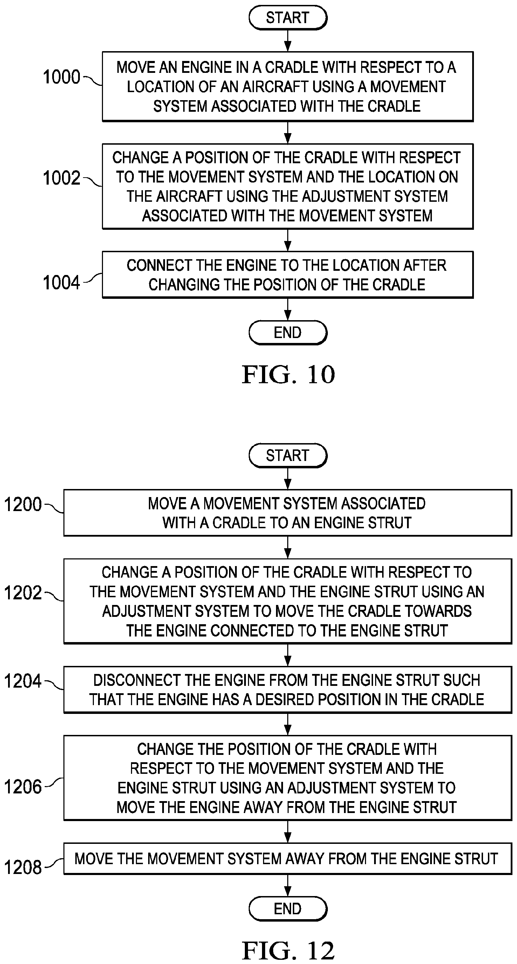

With reference now to **Figure 10**, an illustration of a flowchart of a process for moving an engine is depicted in accordance with an advantageous embodiment. The process illustrated in **Figure 10** may be implemented using engine movement system **306** in engine movement environment **300** in **Figure 3**. Engine movement system **306** may be used to move, for example, without limitation, engine **302** in **Figure 3**.

The process may begin by moving engine **302** in cradle **308** with respect to location **352** on aircraft **304** using movement system **310** associated with cradle **308** (operation **1000**). Operation **1000** may be performed using, for example, without limitation, plurality of wheels **320** for movement system **310**.

Thereafter, position **314** of cradle **308** may be changed with respect to movement system **310** and location **352** on aircraft **304** using adjustment system **312** associated with movement system **310** (operation **1002**). Operation **1002** may be performed to move engine **302** in cradle **308** to desired position **356** such that engine **302** may be connected to location **352**. Engine **302** may then be connected to location **352** after changing position **314** of cradle **308** (operation **1004**), with the process terminating thereafter.

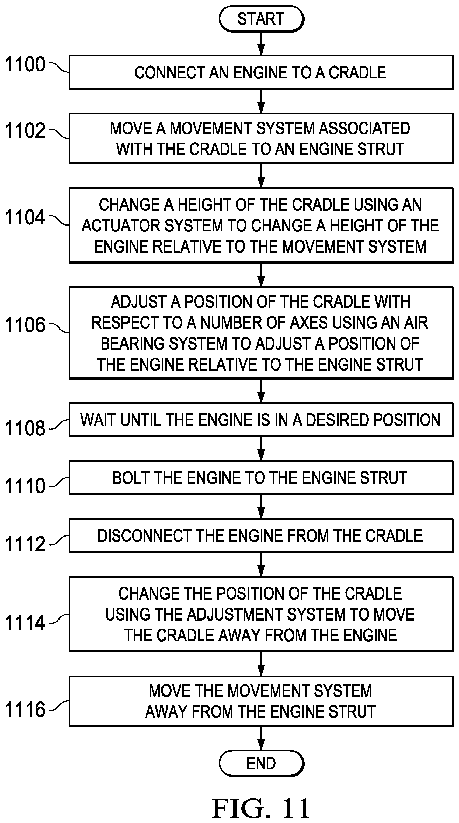

With reference now to **Figure 11**, an illustration of a flowchart of a process for attaching an engine to an engine strut is depicted in accordance with an advantageous embodiment. The process illustrated in **Figure 11** may be implemented using engine movement system **306** in engine movement environment **300** to attach engine **302** to engine strut **354** in **Figure 3**.

The process may begin by connecting engine **302** to cradle **308** (operation **1100**). Operation **1100** may be performed by, for example, without limitation, fastening engine **302** to cradle **308**, strapping engine **302** to cradle **308**, and/or performing some other suitable operation.

Movement system **310** associated with cradle **308** may then be moved to engine strut **354** (operation **1102**). Height **328** of cradle **308** may be changed using actuator system **322** to change a height of engine **302** relative to movement system **310** (operation **1104**). Position **314** of cradle **308** with respect to number of axes **334** may be adjusted using air bearing system **324** to adjust position **325** of engine **302** relative to engine strut **354** (operation **1106**). In some illustrative examples, operation **1104** and operation **1106** may be performed at substantially the same time.

In this illustrative example, operation **1104** and operation **1106** may be performed repeatedly and/or concurrently to move engine **302** into desired position **356**. Thereafter, the process may wait until engine **302** is in desired position **356** (operation **1108**).

In response to engine **302** being in desired position **356**, engine **302** may be bolted to engine strut **354** (operation **1110**). Then, engine **302** may be disconnected from cradle **308** (operation **1112**).

Position **314** of cradle **308** may be changed using adjustment system **312** to move cradle **308** away from engine **302** (operation **1114**). Thereafter, movement system **310** may be moved away from engine strut **354** (operation **1116**), with the process terminating thereafter.

With reference now to **Figure 12**, an illustration of a flowchart for disconnecting an engine from an engine strut is depicted in accordance with an advantageous embodiment. The process illustrated in **Figure 12** may be implemented using engine movement system **306** in engine movement environment **300** to disconnecting engine **302** from engine strut **354** in **Figure 3****.**

The process may begin by moving movement system **310** associated with cradle **308** to engine strut **354** (operation **1200**). Position **314** of cradle **308** may be changed with respect to movement system **310** and engine strut **354** using adjustment system **312** to move cradle **308** towards engine **302** connected to engine strut **354** (operation **1202**). In operation **1202**, cradle **308** may be moved such that position **314** of cradle **308** may allow cradle **308** to receive engine **302**.

Engine **302** may then be disconnected from engine strut **354** such that engine **302** has desired position **356** in cradle **308** (operation **1204**). Thereafter, position **314** of cradle **308** may be changed again with respect to movement system **310** and engine strut **354** using adjustment system **312** to move engine **302** away from engine strut **354** (operation **1206**). Movement system **310** may then be moved away from engine strut **354** (operation **1208**), with the process terminating thereafter.

In this manner, engine **302** may be disconnected from engine strut **354** and moved for maintenance, replacement of engine **302**, testing, and/or other suitable operations.

The flowcharts and block diagrams in the different depicted embodiments illustrate the architecture, functionality, and operation of some possible implementations of apparatus and methods in different advantageous embodiments. In this regard, each block in the flowcharts or block diagrams may represent a module, segment, function, and/or a portion of an operation or step.

In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

Thus, the different advantageous embodiments provide a method and apparatus for moving an engine. In one advantageous embodiment, an apparatus may comprise a cradle, a movement system, and an adjustment system. The cradle may be configured to hold an engine. The movement system may be associated with the cradle and may be configured to move the cradle. The adjustment system may be configured to change a position of the cradle relative to the movement system.

The description of the different advantageous embodiments has been presented for purposes of illustration and description and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An engine loading system (306) for loading an engine (302) of an aircraft (304), the system (306) comprising:
a cradle (308) configured to hold the engine (302);
a movement system (310) associated with the cradle (308) and configured to move the cradle (308); and
**characterized in that** it further comprises an adjustment system (312) comprising:
an actuator system (322) associated with the cradle (308), the actuator system (322) comprising one or more actuators (326); and
one or more universal joints (327) connecting the cradle (308) to the one or more actuators (326), wherein each universal joint comprises:
a housing (610),
a spherical bearing (708) disposed in the housing (710),
a compression spring (712) configured to center the spherical bearing (708) in the housing (710), and
an elongate member (700) connecting the movement system (310) with
the universal joint (327),
the adjustment system (312) being configured to change a position of the cradle (308) with respect to the movement system (310),
wherein the cradle (308), the movement system (310) and the adjustment system (312) are adapted to be shipped with the engine (302).

2. The system (306) of claim 1, wherein the movement system (310) comprises:
a platform (318) associated with the cradle (308); and
a plurality of wheels (320) associated with the platform (318).

3. The system (306) of claim 1, wherein the adjustment system (312) further comprises:
an air bearing system (324).

4. The system (306) of claim 1 further comprising:
the engine (302) in the cradle (308).

5. The system (306) according to any one of the preceding claims, wherein the one or more actuators (326) are configured to provide pitch and/or roll movement to the cradle (308), and to adjust a height of the cradle (308).

6. The system (306) according to any one of the preceding claims, wherein the one or more actuators (326) include a first set of actuators and a second set of actuators, the first set of actuators being configured to support a greater load than the second set of actuators.

7. A method for moving an engine (302) for an aircraft (304), the method comprising:
moving the engine (302) in a cradle (308) with respect to a location (352) on the aircraft (304) using a movement system (310) associated with the cradle (308);
changing a position of the cradle (308) with respect to the movement system (310) and the location (352) on the aircraft (304) using an adjustment system (312) associated with the movement system (310), wherein the adjustment system (312) comprises an actuator system (322) associated with the cradle (308), the adjustment system (312) comprising one or more actuators (326), and one or more universal joints (327) associated with the one or more actuators (326), wherein each universal joint comprises a housing (610), a spherical bearing (708) disposed in the housing (710), a compression spring (712) configured to center the spherical bearing (708) in the housing (710), and an elongate member (700) connecting the movement system (310) with the universal joint (327); and
connecting the engine (302) to the location (352) after changing the position of the cradle (308),
wherein the cradle (308), the movement system (310) and the adjustment system (312) are adapted to be shipped with the engine (302).

8. The method of claim 7, wherein the step of changing the position of the cradle (308) with respect to the movement system (310) and the location (352) on the aircraft (304) using the adjustment system (312) associated with the movement system comprises:
changing a height of the cradle (308) using the actuator system (322) to change a height of the engine (304).

9. The method of claim 7, wherein the step of changing the position of the cradle (308) with respect to the movement system (310) and the location (352) on the aircraft (304) using the adjustment system (312) associated with the movement system comprises:
adjusting an alignment of the cradle (308) using an air bearing system (336) to adjust an alignment of the engine (302).

10. The method of claim 7, wherein the step of changing the position of the cradle (308) with respect to the movement system (310) and the location (352) on the aircraft (304) using the adjustment system (312) associated with the movement system (310) comprises:
changing the position of the cradle (308) with respect to the movement system (310) and the location (352) on the aircraft (304) using the adjustment system (312) associated with the movement system (310) to move the engine (302) into a desired position relative to the location (352) on the aircraft (304).

11. The method of claim 10, wherein the step of connecting the engine (302) to the location (352) after changing the position of the cradle (308) comprises:
bolting the engine (302) in the desired position to the location (352) on the aircraft (304) after changing the position of the cradle (308).

12. The method of claim 7 further comprising:
changing the position of the cradle (308) with respect to the movement system (310) and the location (352) on the aircraft (304) using the adjustment system (312) associated with the movement system (310) to move the cradle (308) away from the engine (302); and
moving the movement system (310) away from the location (352) on the aircraft (304) after moving the cradle (308) away from the engine (302).

13. The method of claim 12 further comprising:
moving the movement system (310) to the location (352) on the aircraft (304);
changing the position of the cradle (308) with respect to the movement system (310) and the location (352) on the aircraft (304) using the adjustment system (312) associated with the movement system (310) to move the cradle (308) towards the engine (302) at the location (352) on the aircraft (304);
disconnecting the engine (302) from the location (352) on the aircraft (304) such that the engine (302) has a desired position in the cradle (308);
changing the position of the cradle (308) with respect to the movement system (310) and the location (352) on the aircraft (304) using the adjustment system (312) associated with the movement system (310) to move the engine (302) away from the location (352) on the aircraft (304); and
moving the movement system (310) away from the location (352) on the aircraft (304).

## Patentansprüche

1. Triebwerkszuführsystem (306) zum Zuführen eines Triebwerks (302) eines Flugzeugs (304), wobei das System (306) aufweist:
ein Gestell (308), das dazu konfiguriert ist, das Triebwerk (302) zu halten;
ein Bewegungssystem (310), das zu dem Gestell (308) zugehörig und dazu konfiguriert ist, das Gestell (308) zu bewegen; und
**dadurch gekennzeichnet, dass** es des Weiteren aufweist:
ein Einstellsystem (312), welches aufweist:
ein Aktorsystem (322), das zu dem Gestell (308) zugehörig ist, wobei das Aktorsystem (322) einen oder mehrere Aktoren (326) aufweist; und
ein oder mehrere Gelenkstücke (327), die das Gestell (308) mit dem einen oder den mehreren Aktoren (326) verbinden, wobei jedes Gelenkstück aufweist:
ein Gehäuse (610),
ein Pendellager (708), das in dem Gehäuse (710) angeordnet ist,
eine Druckfeder (712), die dazu konfiguriert ist, das Pendellager (708) in dem Gehäuse (710) zu zentrieren, und
ein längliches Element (700), das das Bewegungssystem (310) mit dem Gelenkstück (327) verbindet,
wobei das Einstellsystem (312) dazu konfiguriert ist, eine Position des Gestells (308) bezüglich des Bewegungssystems (310) zu ändern,
wobei das Gestell (308), das Bewegungssystem (310) und das Einstellsystem (312) dazu ausgelegt sind, mit dem Triebwerk (302) versandt zu werden.

2. System (306) nach Anspruch 1, wobei das Bewegungssystem (310) aufweist:
eine Plattform (318), die zu dem Gestell (308) zugehörig ist; und
eine Vielzahl von Rädern (320), die zu der Plattform (318) zugehörig sind.

3. System (306) nach Anspruch 1, wobei das Einstellsystem (312) des Weiteren aufweist:
ein Luftlagersystem (324).

4. System (306) nach Anspruch 1, das des Weiteren aufweist:
das Triebwerk (302) in dem Gestell (308).

5. System (306) nach einem der vorhergehenden Ansprüche, wobei der eine oder die mehreren Aktoren (326) dazu konfiguriert sind, eine Nick- und/oder RollBewegung für das Gestell (308) bereitzustellen und die Höhe des Gestells (308) einzustellen.

6. System (306) nach einem der vorhergehenden Ansprüche, wobei der eine oder die mehreren Aktoren (326) einen ersten Satz von Aktoren und einen zweiten Satz von Aktoren aufweisen, wobei der erste Satz von Aktoren dazu konfiguriert ist, eine größere Last zu unterstützen als der zweite Satz von Aktoren.

7. Verfahren zum Bewegen eines Triebwerks (302) für ein Flugzeug (304), wobei das Verfahren beinhaltet:
Bewegen des Triebwerks (302) in einem Gestell (308) bezüglich einer Stelle (352) an dem Flugzeug (304) mittels eines Bewegungssystems (310), das zu dem Gestell (308) zugehörig ist;
Ändern einer Position des Gestells (308) bezüglich des Bewegungssystems (310) und der Stelle (352) an dem Flugzeug (304) mittels eines Einstellsystems (312), das zu dem Bewegungssystem (310) zugehörig ist, wobei das Einstellsystem (312) ein Aktorsystem (322) aufweist, das zu dem Gestell (308) zugehörig ist, wobei das Einstellsystem (312) einen oder mehrere Aktoren (326) und ein oder mehrere Gelenkstücke (327) aufweist, die zu dem einen oder den mehreren Aktoren (326) zugehörig sind, wobei jedes Gelenkstück ein Gehäuse (610) aufweist, ein Pendellager (708), das sich in dem Gehäuse (710) befindet, eine Druckfeder (712), die dazu konfiguriert ist, das Pendellager (708) in dem Gehäuse (710) zu zentrieren, und ein längliches Element (700), das das Bewegungssystem (310) mit dem Gelenkstück (327) verbindet; und
Verbinden des Triebwerks (302) mit der Stelle (352) nach dem Ändern der Position des Gestells (308),
wobei das Gestell (308), das Bewegungssystem (310) und das Einstellsystem (312) dazu ausgelegt sind, mit dem Triebwerk (302) versandt zu werden.

8. Verfahren nach Anspruch 7, wobei der Schritt des Änderns der Position des Gestells (308) bezüglich des Bewegungssystems (310) und der Stelle (352) an dem Flugzeug (304) mittels des Einstellsystems (312), das zu dem Bewegungssystem zugehörig ist, beinhaltet:
Ändern der Höhe des Gestells (308) mittels des Aktorsystems (322), um die Höhe des Triebwerks (304) zu ändern.

9. Verfahren nach Anspruch 7, wobei der Schritt des Änderns der Position des Gestells (308) bezüglich des Bewegungssystems (310) und der Stelle (352) an dem Flugzeug (304) mittels des Einstellsystems (312), das zu dem Bewegungssystem zugehörig ist, beinhaltet:
Einstellen der Ausrichtung des Gestells (308) mittels eines Luftlagersystems (336), um die Ausrichtung des Triebwerks (302) einzustellen.

10. Verfahren nach Anspruch 7, wobei der Schritt des Änderns der Position des Gestells (308) bezüglich des Bewegungssystems (310) und der Stelle (352) an dem Flugzeug (304) mittels des Einstellsystems (312), das zu dem Bewegungssystem (310) zugehörig ist, beinhaltet:
Ändern der Position des Gestells (308) bezüglich des Bewegungssystems (310) und der Stelle (352) an dem Flugzeug (304) mittels des Einstellsystems (312), das zu dem Bewegungssystem (310) zugehörig ist, um das Triebwerk (302) bezüglich der Stelle (352) an dem Flugzeug (304) in eine gewünschte Position zu bewegen.

11. Verfahren nach Anspruch 10, wobei der Schritt des Verbindens des Triebwerks (302) mit der Stelle (352) nach dem Ändern der Position des Gestells (308) beinhaltet:
Festschrauben des Triebwerks (302) an der gewünschten Position an der Stelle (352) an dem Flugzeug (304) nach dem Ändern der Position des Gestells (308).

12. Verfahren nach Anspruch 7, das des Weiteren beinhaltet:
Ändern der Position des Gestells (308) bezüglich des Bewegungssystems (310) und der Stelle (352) an dem Flugzeug (304) mittels des Einstellsystems (312), das zu dem Bewegungssystem (310) zugehörig ist, um das Gestell (308) von dem Triebwerk (302) weg zu bewegen; und
Wegbewegen des Bewegungssystems (310) von der Stelle (352) an dem Flugzeug (304) nach dem Wegbewegen des Gestells (308) von dem Triebwerk (302).

13. Verfahren nach Anspruch 12, das des Weiteren beinhaltet:
Bewegen des Bewegungssystems (310) an die Stelle (352) an dem Flugzeug (304);
Ändern der Position des Gestells (308) bezüglich des Bewegungssystems (310) und der Stelle (352) an dem Flugzeug (304) mittels des Einstellsystems (312), das zu dem Bewegungssystem (310) zugehörig ist, um das Gestell (308) in Richtung des Triebwerks (302) an der Stelle (352) an dem Flugzeug (304) zu bewegen;
Trennen des Triebwerks (302) von der Stelle (352) an dem Flugzeug (304), so dass das Triebwerk (302) eine gewünschte Position in dem Gestell (308) hat;
Ändern der Position des Gestells (308) bezüglich des Bewegungssystems (310) und der Stelle (352) an dem Flugzeug (304) mittels des Einstellsystems (312), das zu dem Bewegungssystem (310) zugehörig ist, um das Triebwerk (302) von der Stelle (352) an dem Flugzeug (304) weg zu bewegen; und
Wegbewegen des Bewegungssystems (310) von der Stelle (352) an dem Flugzeug (304).

## Revendications

1. Système de chargement d'un moteur (306) destiné à charger un moteur (302) d'un aéronef (304), le système (306) comprenant :
un arceau (308) configuré pour retenir le moteur (302) ;
un moyen de déplacement (310) associé à l'arceau (308) et configuré pour déplacer l'arceau (308) ; et
**caractérisé en ce qu'**il comprend en outre un moyen de réglage (312) comprenant :
un moyen d'actionneur (322) associé à l'arceau (308), le moyen d'actionneur (322) comprenant un ou plusieurs actionneurs (326) ; et
un ou plusieurs joints universels (327) reliant l'arceau (308) à l'un ou plusieurs actionneurs (326), dans lequel chaque joint universel comprend :
un logement (61 0),
un palier sphérique (708) disposé dans le logement (710),
un ressort de compression (712) configuré pour centrer le palier sphérique (708) dans le logement (71 0), et
un élément allongé (700) reliant le moyen de déplacement (310) au joint universel (327),
le moyen de réglage (312) étant configuré pour changer une position de l'arceau (308) par rapport au moyen de déplacement (31 0),
dans lequel l'arceau (308), le moyen de déplacement (310) et le moyen de réglage (31 2) sont adaptés pour être expédiés avec le moteur (302).

2. Système (306) selon la revendication 1, dans lequel le moyen de déplacement (310) comprend :
une plateforme (31 8) associée à l'arceau (308) ; et
une pluralité de roues (320) associées à la plateforme (31 8).

3. Système (306) selon la revendication 1, dans lequel le moyen de réglage (31 2) comprend en outre :
un moyen de palier à air (324).

4. Système (306) selon la revendication 1, comprenant en outre :
le moteur (302) dans l'arceau (308).

5. Système (306) selon une quelconque des revendications précédentes, dans lequel l'un ou plusieurs actionneurs (326) sont configurés pour fournir un mouvement de tangage et/ou de roulis à l'arceau (308), et pour régler une hauteur de l'arceau (308).

6. Système (306) selon une quelconque des revendications précédentes, dans lequel l'un ou plusieurs actionneurs (326) comportent un premier jeu d'actionneurs et un second jeu d'actionneurs, le premier jeu d'actionneurs étant configuré pour supporter une charge plus importante que le second jeu d'actionneurs.

7. Procédé destiné à déplacer un moteur (302) pour un aéronef (304), le procédé consistant à :
déplacer le moteur (302) dans un arceau (308) par rapport à un emplacement (352) sur l'aéronef (304) en utilisant un moyen de déplacement (310) associé à l'arceau (308) ;
changer une position de l'arceau (308) par rapport au moyen de déplacement (310) et l'emplacement (352) sur l'aéronef (304) en utilisant un moyen de réglage (312) associé au moyen de déplacement (310), le moyen de réglage (312) comprenant un moyen d'actionneur (322) associé à l'arceau (308), le moyen de réglage (312) comprenant l'un ou plusieurs actionneurs (326), et un ou plusieurs joints universels (327) associés à l'un ou plusieurs actionneurs (326), chaque joint universel comprenant un logement (610), un palier sphérique (708) disposé dans le logement (710), un ressort de compression (712) configuré pour centrer le palier sphérique (708) dans le logement (710), et un élément allongé (700) reliant le moyen de déplacement (310) au joint universel (327) ; et
relier le moteur (302) à l'emplacement (352) après avoir changé la position de l'arceau (308),
dans lequel l'arceau (308), le moyen de déplacement (310) et le moyen de réglage (31 2) sont adaptés pour être expédiés avec le moteur (302).

8. Procédé selon la revendication 7, dans lequel l'étape consistant à changer la position de l'arceau (308) par rapport au moyen de déplacement (310) et l'emplacement (352) sur l'aéronef (304) en utilisant le moyen de réglage (312) associé au moyen de déplacement consiste à :
changer une hauteur de l'arceau (308) en utilisant le moyen d'actionneur (322) pour changer une hauteur du moteur (304).

9. Procédé selon la revendication 7, dans lequel l'étape consistant à changer la position de l'arceau (308) par rapport au moyen de déplacement (310) et l'emplacement (352) sur l'aéronef (304) en utilisant le moyen de réglage (312) associé au moyen de déplacement consiste à :
régler un alignement de l'arceau (308) en utilisant un moyen de palier à air (336) pour régler un alignement du moteur (302).

10. Procédé selon la revendication 7, dans lequel l'étape consistant à changer la position de l'arceau (308) par rapport au moyen de déplacement (310) et l'emplacement (352) sur l'aéronef (304) en utilisant le moyen de réglage (312) associé au moyen de déplacement (310) consiste à :
changer la position de l'arceau (308) par rapport au moyen de déplacement (310) et l'emplacement (352) sur l'aéronef (304) en utilisant le moyen de réglage (312) associé au moyen de déplacement (310) pour déplacer le moteur (302) dans une position souhaitée par rapport à l'emplacement (352) sur l'aéronef (304).

11. Procédé selon la revendication 10, dans lequel l'étape consistant à relier le moteur (302) à l'emplacement (352) après avoir changé la position de l'arceau (308) consiste à :
verrouiller le moteur (302) dans la position souhaitée sur l'emplacement (352) sur l'aéronef (304) après avoir changé la position de l'arceau (308).

12. Procédé selon la revendication 7, consistant en outre à :
changer la position de l'arceau (308) par rapport au moyen de déplacement (310) et l'emplacement (352) sur l'aéronef (304) en utilisant le moyen de réglage (312) associé au moyen de déplacement (310) pour déplacer l'arceau (308) à distance du moteur (302) ; et
déplacer le moyen de déplacement (310) à distance de l'emplacement (352) sur l'aéronef (304) après avoir déplacé l'arceau (308) à distance du moteur (302).

13. Procédé selon la revendication 12, consistant en outre à :
déplacer le moyen de déplacement (310) vers l'emplacement (352) sur l'aéronef (304) ;
changer la position de l'arceau (308) par rapport au moyen de déplacement (310) et l'emplacement (352) sur l'aéronef (304) en utilisant le moyen de réglage (312) associé au moyen de déplacement (310) pour déplacer l'arceau (3 08) vers le moteur (3 02) au niveau de l'emplacement (352) sur l'aéronef (304) ;
déconnecter le moteur (302) de l'emplacement (3 52) sur l'aéronef (304) de telle sorte que le moteur (302) ait une position souhaitée dans l'arceau (308) ;
changer la position de l'arceau (308) par rapport au moyen de déplacement (310) et l'emplacement (352) sur l'aéronef (304) en utilisant le moyen de réglage (312) associé au moyen de déplacement (310) pour déplacer le moteur (302) à distance de l'emplacement (352) sur l'aéronef (304) ; et
déplacer le moyen de déplacement (310) à distance de l'emplacement (352) sur l'aéronef (304).
